# EUROPEAN PATENT APPLICATION

(11) **EP 4 783 530 A1**
(43) Date of publication of application: **29.07.2026**
(21) Application number: 24878436.5
(22) Date of filing: 10.05.2024
(51) Int. Cl.: H04L 41/082

(54) **DEVICE UPGRADE METHOD AND RELATED DEVICE**

(30) Priority: 16.10.2023 CN 202311343254
(71) Applicant: HUAWEI TECHNOLOGIES CO., LTD., Shenzhen 518129 (CN)
(72) Inventor: WU, Tiejun, Shenzhen, Guangdong 518129 (CN); ZHANG, Chengceng, Shenzhen, Guangdong 518129 (CN)
(74) Representative: Körber, Martin Hans
(86) International application number: PCT/CN2024/092167
(87) International publication number: WO 2025/081783

(57) **Abstract**

A device upgrade method and a related device are provided. The device upgrade method includes: A primary device receives a first upgrade package sent by a first device, where the first upgrade package includes a second upgrade package used to upgrade the primary device and a third upgrade package used to upgrade a secondary device. The primary device performs upgrade based on the second upgrade package, and/or the primary device sends the third upgrade package to the secondary device to enable the secondary device to perform upgrade based on the third upgrade package. In other words, after the first device merges upgrade packages for the primary device and the secondary device and sends a merged upgrade package to the primary device, the first device does not need to participate in a subsequent upgrade procedure and does not need to access the secondary device. Instead, the primary device completes upgrade of the primary device and the secondary device. In other words, the first device and the primary device complete upgrade operations asynchronously. This improves network device upgrade efficiency.

## Description

This application claims priority to Chinese Patent Application No. 202311343254.9, filed with the China National Intellectual Property Administration on October 16, 2023 and entitled "DEVICE UPGRADE METHOD AND RELATED DEVICE", which is incorporated herein by reference in its entirety.

### TECHNICAL FIELD

Embodiments of this application relate to the field of internet technologies, and specifically, to a device upgrade method and a related device.

### BACKGROUND

In the digital era where everything is connected, the internet has become an indispensable part of life. The demand for fiber to the room (fiber to the room, FTTR) is also increasing.

In addition to a conventional primary gateway device, a plurality of secondary gateway devices are required in a home network environment to implement FTTR. For example, a plurality of access point (access point, AP) devices are deployed in different rooms, to provide a user with a high-bandwidth and low-latency network access service. When a quantity of primary gateways and APs in the home network environment increases, these network devices need to be upgraded and maintained. Currently, an auto-configuration server (auto-configuration server, ACS) is commonly used to implement upgrade of each primary gateway device and secondary gateway device.

However, it is difficult for the ACS server to directly access the secondary gateway device, and cooperation of the primary gateway device is required. In addition, as a quantity of secondary gateway devices increases, the ACS server upgrades the secondary gateway devices one by one, resulting in a reduction in efficiency in an entire upgrade procedure.

### SUMMARY

Embodiments of this application provide a device upgrade method and a related device, to improve network device upgrade efficiency. Embodiments of this application further provide a corresponding network device, a compute device, a storage medium, and the like.

A first aspect of this application provides a device upgrade method. The method includes: A primary device receives a first upgrade package sent by a first device, where the first upgrade package includes a second upgrade package used to upgrade the primary device and a third upgrade package used to upgrade a secondary device. The primary device performs upgrade based on the second upgrade package, and/or the primary device sends the third upgrade package to the secondary device to enable the secondary device to perform upgrade based on the third upgrade package.

In this application, the device upgrade method may be applied to a networking scenario of fiber to the home such as fiber to the room. In this scenario, there is a primary device (which may also be referred to as a primary gateway, a gateway, or an optical network terminal device), one or more secondary devices (which may also be referred to as a secondary gateway, an access point, or an edge optical network terminal device), and a first device (for example, an auto-configuration server) configured to upgrade the primary device and the secondary device.

In this application, the first device may directly use a data node defined in TR-181 in a current standard TR-069 protocol family to obtain a quantity of secondary devices in a network in a current scenario (where there is one primary device by default), that is, obtain, according to a current standard protocol, information about the secondary device connected to the primary device in the network. After obtaining the information, the first device may merge the upgrade packages for the primary device and the secondary device based on the information.

In this application, after the primary device receives the first upgrade package, the primary device needs to separately extract the second upgrade package and the third upgrade package from the first upgrade package. The primary device may only upgrade the primary device based on the second upgrade package, or may only send the third upgrade package to the secondary device to enable the secondary device to perform upgrade based on the third upgrade package, or may perform upgrade based on the second upgrade package and send the third upgrade package to the secondary device.

In this application, after receiving the first upgrade package, the primary device may determine upgrade time independently or based on information in the first upgrade package. For example, after receiving the first upgrade package, the primary device may immediately perform upgrade based on the second upgrade package, and send the third upgrade package to the secondary device after waiting for preset time, or enable the secondary device to start upgrade after preset time from the secondary device receiving the third upgrade package. An upgrade timing of the primary device or the secondary device may be determined based on a user requirement.

In this application, the first device completes an upgrade procedure after sending the first upgrade package to the primary device, and the first device does not need to participate in a subsequent upgrade procedure. This reduces load of the first device. After receiving the first upgrade package, the primary device may send a plurality of third upgrade packages simultaneously to a plurality of corresponding different secondary devices while upgrading the primary device. The primary device may either not participate in an upgrade procedure of the secondary device, and the secondary device automatically performs upgrade by default after receiving the third upgrade package. In addition, if the primary device supports processing of only one task at the same time, the primary device may alternatively send the third upgrade package separately to a plurality of secondary devices in a default sequence. When the third upgrade package is sent to a second secondary device, a first secondary device has received the third upgrade package and performed upgrade. In this way, an asynchronous parallel upgrade procedure is implemented. This can significantly improve upgrade efficiency when the quantity of secondary devices is large.

According to the first aspect, the primary device receives the first upgrade package sent by the first device, where the first upgrade package includes the second upgrade package used to upgrade the primary device and the third upgrade package used to upgrade the secondary device. The primary device performs upgrade based on the second upgrade package, and/or the primary device sends the third upgrade package to the secondary device to enable the secondary device to perform upgrade based on the third upgrade package. In other words, after the first device merges upgrade packages for the primary device and the secondary device and sends a merged upgrade package to the primary device, the first device does not need to participate in a subsequent upgrade procedure and does not need to access the secondary device. Instead, the primary device completes upgrade of the primary device and the secondary device. In other words, the first device and the primary device complete upgrade operations asynchronously. This improves network device upgrade efficiency.

In a possible implementation of the first aspect, the first upgrade package includes a common upgrade package and a differential upgrade package. The common upgrade package includes an identical part of the second upgrade package and the third upgrade package. The differential upgrade package includes a non-identical part of the second upgrade package and the third upgrade package, and description information of the non-identical part.

In this possible implementation, the second upgrade package and the third upgrade package are merged into the first upgrade package in a differential merging manner, and only one copy of data needs to be retained for the identical part of the two upgrade packages. This reduces space occupied by the first upgrade package, and reduces storage pressure of the primary device and data transmission time.

In a possible implementation of the first aspect, before the step that the primary device performs upgrade based on the second upgrade package, the method further includes: The primary device extracts the second upgrade package from the common upgrade package and the differential upgrade package. Before the step that the primary device sends the third upgrade package to the secondary device, the method further includes: The primary device extracts the third upgrade package from the common upgrade package and the differential upgrade package.

In this possible implementation, when the first upgrade package is obtained through merging in the differential merging manner, the primary device needs to separately extract content of the second upgrade package and content of the third upgrade package from the first upgrade package, and then assemble the content to restore the second upgrade package and the third upgrade package. This improves implementability of the solution.

In a possible implementation of the first aspect, the first upgrade package further includes file header information. The file header information is used to describe offset information and an upgrade package size of the second upgrade package, and offset information and an upgrade package size of the third upgrade package.

In this possible implementation, the second upgrade package and the third upgrade package may be directly merged, and distinguished by using the file header information. This improves implementability of the solution.

In a possible implementation of the first aspect, the primary device communicates with the secondary device according to a universal plug and play UPnP extended protocol.

In this possible implementation, the primary device communicates with the secondary device according to the UPnP extended protocol, so that the primary device controls the upgrade operation of the secondary device. This improves implementability of the solution.

In a possible implementation of the first aspect, the first device is an auto-configuration server or a computer device.

In this possible implementation, an operator may remotely control upgrade via the auto-configuration server, or a maintenance engineer of an operator may control upgrade by locally using the computer device. This improves implementability of the solution.

A second aspect of this application provides a device upgrade method. The method includes: A first device obtains a first upgrade package, where the first upgrade package includes a second upgrade package used to upgrade a primary device and a third upgrade package used to upgrade a secondary device. The first device sends the first upgrade package to the primary device, so that the primary device performs upgrade based on the second upgrade package, and/or upgrades the secondary device based on the third upgrade package.

In a possible implementation of the second aspect, the first upgrade package includes a common upgrade package and a differential upgrade package. The common upgrade package includes an identical part of the second upgrade package and the third upgrade package. The differential upgrade package includes a non-identical part of the second upgrade package and the third upgrade package, and description information of the non-identical part.

In a possible implementation of the second aspect, the common upgrade package and the differential upgrade package are determined by the first device based on a hash algorithm.

In this possible implementation, when obtaining the first upgrade package through merging by using a differential merging solution, the first device may quickly implement difference comparison between the second upgrade package and the third upgrade package based on the hash algorithm, to extract the common upgrade package and the differential upgrade package. This improves implementability of the solution.

In a possible implementation of the second aspect, the first upgrade package further includes file header information. The file header information is used to describe offset information and an upgrade package size of the second upgrade package, and offset information and an upgrade package size of the third upgrade package.

In a possible implementation of the second aspect, the primary device communicates with the secondary device according to a universal plug and play UPnP extended protocol.

In a possible implementation of the second aspect, the first device is an auto-configuration server or a computer device.

A third aspect of this application provides a device upgrade method. The method includes: A secondary device receives a third upgrade package sent by a primary device, where the third upgrade package is extracted by the primary device from a first upgrade package, and the first upgrade package is sent by a first device to the primary device. The secondary device performs upgrade based on the third upgrade package.

In a possible implementation of the third aspect, the secondary device communicates with the primary device according to a universal plug and play UPnP extended protocol.

A fourth aspect of this application provides a compute device, configured to perform the method according to any one of the first aspect or the possible implementations of the first aspect. Specifically, the compute device includes a module or a unit configured to perform the method according to any one of the first aspect or the possible implementations of the first aspect, for example, a receiving unit, an upgrade unit, and an extraction unit.

A fifth aspect of this application provides a compute device, configured to perform the method according to any one of the second aspect or the possible implementations of the second aspect. Specifically, the compute device includes a module or a unit configured to perform the method according to any one of the second aspect or the possible implementations of the second aspect, for example, an obtaining unit and a sending unit.

A sixth aspect of this application provides a compute device, configured to perform the method according to any one of the third aspect or the possible implementations of the third aspect. Specifically, the compute device includes a module or a unit configured to perform the method according to any one of the third aspect or the possible implementations of the third aspect, for example, a receiving unit and an upgrade unit.

A seventh aspect of this application provides a compute device. The compute device includes a processor, a memory, and a computer-readable storage medium storing a computer program. The processor is coupled to the computer-readable storage medium. The processor runs computer-executable instructions. When the computer-executable instructions are executed by the processor, the processor performs the method according to any one of the first aspect or the possible implementations of the first aspect. Optionally, the compute device may further include an input/output (input/output, I/O) interface, and the computer-readable storage medium storing the computer program may be a memory.

An eighth aspect of this application provides a compute device. The compute device includes a processor, a memory, and a computer-readable storage medium storing a computer program. The processor is coupled to the computer-readable storage medium. The processor runs computer-executable instructions. When the computer-executable instructions are executed by the processor, the processor performs the method according to any one of the second aspect or the possible implementations of the second aspect. Optionally, the compute device may further include an input/output (input/output, I/O) interface, and the computer-readable storage medium storing the computer program may be a memory.

A ninth aspect of this application provides a compute device. The compute device includes a processor, a memory, and a computer-readable storage medium storing a computer program. The processor is coupled to the computer-readable storage medium. The processor runs computer-executable instructions. When the computer-executable instructions are executed by the processor, the processor performs the method according to any one of the third aspect or the possible implementations of the third aspect. Optionally, the compute device may further include an input/output (input/output, I/O) interface, and the computer-readable storage medium storing the computer program may be a memory.

According to a tenth aspect, this application provides a computer-readable storage medium storing one or more computer-executable instructions. When the computer-executable instructions are executed by a processor, the processor performs the method according to any one of the first aspect or the possible implementations of the first aspect.

According to an eleventh aspect, this application provides a computer-readable storage medium storing one or more computer-executable instructions. When the computer-executable instructions are executed by a processor, the processor performs the method according to any one of the second aspect or the possible implementations of the second aspect.

According to a twelfth aspect, this application provides a computer-readable storage medium storing one or more computer-executable instructions. When the computer-executable instructions are executed by a processor, the processor performs the method according to any one of the third aspect or the possible implementations of the third aspect.

A thirteenth aspect of this application provides a computer program product storing one or more computer-executable instructions. When the computer-executable instructions are executed by a processor, the processor performs the method according to any one of the first aspect or the possible implementations of the first aspect.

A fourteenth aspect of this application provides a computer program product storing one or more computer-executable instructions. When the computer-executable instructions are executed by a processor, the processor performs the method according to any one of the second aspect or the possible implementations of the second aspect.

A fifteenth aspect of this application provides a computer program product storing one or more computer-executable instructions. When the computer-executable instructions are executed by a processor, the processor performs the method according to any one of the third aspect or the possible implementations of the third aspect.

A sixteenth aspect of this application provides a chip system. The chip system includes at least one processor and an interface. The interface is configured to receive data and/or a signal. The at least one processor is configured to support a computer device in implementing a function in any one of the first aspect or the possible implementations of the first aspect. In a possible design, the chip system may further include a memory. The memory is configured to store program instructions and data that are necessary for the computer device. The chip system may include a chip, or may include a chip and another discrete component.

A seventeenth aspect of this application provides a chip system. The chip system includes at least one processor and an interface. The interface is configured to receive data and/or a signal. The at least one processor is configured to support a computer device in implementing a function in any one of the second aspect or the possible implementations of the second aspect. In a possible design, the chip system may further include a memory. The memory is configured to store program instructions and data that are necessary for the computer device. The chip system may include a chip, or may include a chip and another discrete component.

An eighteenth aspect of this application provides a chip system. The chip system includes at least one processor and an interface. The interface is configured to receive data and/or a signal. The at least one processor is configured to support a computer device in implementing a function in any one of the third aspect or the possible implementations of the third aspect. In a possible design, the chip system may further include a memory. The memory is configured to store program instructions and data that are necessary for the computer device. The chip system may include a chip, or may include a chip and another discrete component.

In embodiments of this application, the primary device receives the first upgrade package sent by the first device, where the first upgrade package includes the second upgrade package used to upgrade the primary device and the third upgrade package used to upgrade the secondary device. The primary device performs upgrade based on the second upgrade package, and/or the primary device sends the third upgrade package to the secondary device to enable the secondary device to perform upgrade based on the third upgrade package. In other words, after the first device merges upgrade packages for the primary device and the secondary device and sends a merged upgrade package to the primary device, the first device does not need to participate in a subsequent upgrade procedure and does not need to access the secondary device. Instead, the primary device completes upgrade of the primary device and the secondary device. In other words, the first device and the primary device complete upgrade operations asynchronously. This improves network device upgrade efficiency.

### BRIEF DESCRIPTION OF DRAWINGS

FIG. 1 is a diagram of a networking scenario of fiber to the room in a home network;
FIG. 2 is a diagram of upgrade and maintenance of fiber to the room in a home network;
FIG. 3 is a diagram of an embodiment of a device upgrade method according to an embodiment of this application;
FIG. 4 is a diagram of a first upgrade package according to an embodiment of this application;
FIG. 5 is a diagram of merging into a first upgrade package according to an embodiment of this application;
FIG. 6 is a diagram of another embodiment of a device upgrade method according to an embodiment of this application;
FIG. 7 is a diagram of another embodiment of a device upgrade method according to an embodiment of this application;
FIG. 8 is a diagram of a second upgrade package and a third upgrade package according to an embodiment of this application;
FIG. 9 and FIG. 10 are schematic flowcharts of merging into a first upgrade package according to an embodiment of this application;
FIG. 11 is another diagram of a first upgrade package according to an embodiment of this application;
FIG. 12 is a diagram of a data relationship of a first upgrade package according to an embodiment of this application;
FIG. 13 to FIG. 15 are diagrams of embodiments of a network device according to an embodiment of this application; and
FIG. 16 is a diagram of an embodiment of a compute device according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may know that with development of technologies and emergence of a new scenario, the technical solutions provided in embodiments of this application are also applicable to a similar technical problem.

In the specification, claims, and accompanying drawings of this application, the terms such as "first" and "second" are intended to distinguish between similar objects but do not necessarily indicate a specific order or sequence. It should be understood that the data termed in such a way is interchangeable in proper circumstances, so that embodiments described herein can be implemented in other orders than the order illustrated or described herein. In addition, the terms "include" and "have" and any other variants thereof are intended to cover a non-exclusive inclusion. For example, a process, method, system, product, or device that includes a list of steps or units is not necessarily limited to those expressly listed steps or units, but may include other steps or units that are not expressly listed or inherent to the process, method, product, or device.

The specific term "example" herein means "used as an example, embodiment or illustration". Any embodiment described herein as an "example" is not necessarily explained as being superior to or better than other embodiments.

In addition, to better describe this application, numerous details are given in the following specific implementations. A person skilled in the art should understand that this application can also be implemented without some details. In some instances, methods, means, elements and circuits that are well-known to a person skilled in the art are not described in detail, so that a subject matter of this application is highlighted.

The following explains and describes terms and concepts in embodiments of this application.

### (1) Fiber to the room (fiber to the room, FTTR)/Fiber to the home (fiber to the home, FTTH)

FTTR and FTTH are currently main access modes for connection of homes and small and medium-sized enterprises to the internet.

### (2) Primary gateway

The primary gateway is also referred to as a primary device. The primary gateway is a device configured in a home network to aggregate and connect all network devices in the home network to the internet, and is usually placed in a weak-current box of the home network.

### (3) Secondary gateway

The secondary gateway is also referred to as a secondary device. The secondary gateway is a part of home network devices, is configured to aggregate and connect a part of network devices to a primary gateway, and is usually placed in a home room or another place far away from a weak-current box to extend a connection range of a home network.

### (4) Optical network terminal device (optical network terminal, ONT)/Optical network unit (optical network unit, ONU)

By default, the ONT and the ONU are types of main devices in home network devices.

### (5) Access point (access point, AP)

The AP is an (aggregation point) device that connects (interconnects) a network device to a network. The AP is a type of secondary device in a home network device.

### (6) Edge ONT (edge ONT)

The edge ONT is an edge device connected to a primary gateway ONT in a home network, to extend a connection range of a home network. The edge ONT has a similar role to an AP, but has more powerful functions and better performance than the AP. The edge ONT is also a type of secondary device.

### (7) Optical line terminal (optical line terminal, OLT)

The OLT is a device in an optical fiber access network (FTTH), and is configured to: convert an optical fiber signal into an electrical signal, and send the electrical signal to a terminal device of a user.

### (8) Auto-configuration server (auto configuration server, ACS)

The ACS is a server in a home network that is managed by an operator and that is configured to maintain and configure a home network device.

### (9) TR-069 (Technical Report 069)

TR-069 is a remote management protocol, a remote management protocol defined by the international telecommunication union (ITU-T), and is used to remotely manage and configure a device of an internet service provider (internet service provider, ISP).

### (10) Universal plug and play (universal plug and play, UPNP) protocol

UPnP is an inter-device communication protocol based on an internet protocol (internet protocol, IP) network, and enables a device to automatically discover and connect to another device in the network, implementing interconnection and communication between the devices.

The following describes, by using an example with reference to the foregoing term and concepts, an application scenario in embodiments of this application.

In the digital era where everything is connected, the internet has become an indispensable part of life. With the wide application of gigabit optical fiber networks, the demand for fiber to the room (fiber to the room, FTTR) is also increasing.

In addition to a conventional primary gateway device, a plurality of secondary gateway devices are required in a home network environment to implement FTTR. For example, a plurality of secondary devices such as AP devices or edge ONTs are deployed in different rooms, to provide a user with a high-bandwidth and low-latency network access service.

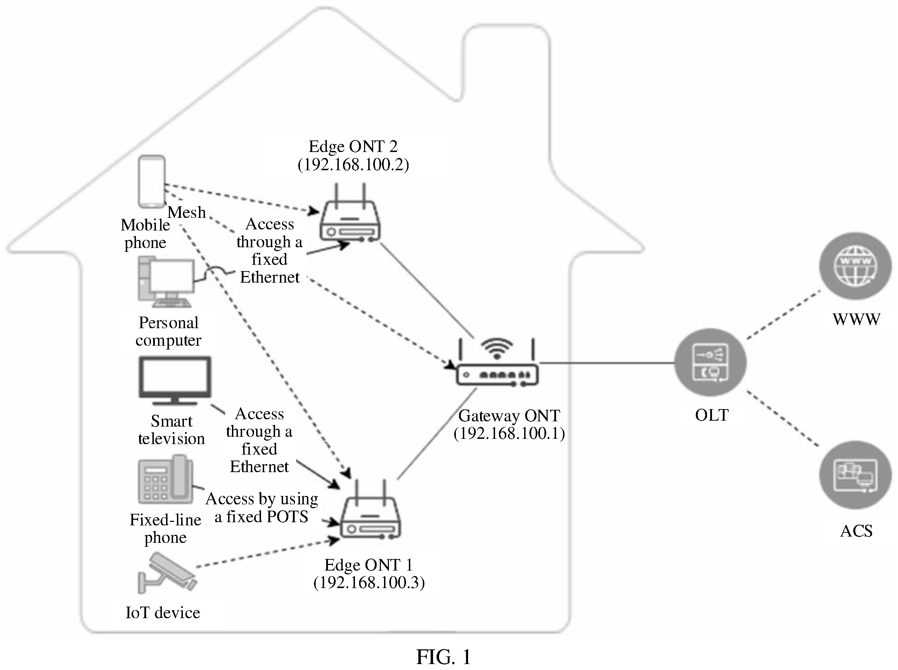

As shown in FIG. 1, a primary device (gateway ONT, 192.168.100.1), a secondary device (edge ONT 1, 192.168.100.3), and a secondary device (edge ONT 2, 192.168.100.2) are configured in a current home network environment. The primary device is connected to a network such as the World Wide Web (WWW) and an ACS via an OLT. The two secondary devices are connected to the primary device. A home network device includes a mobile phone, a personal computer, a smart television, a fixed-line phone, an internet of things (internet of things, IoT) device, and the like. The mobile phone may access the internet via any primary device or secondary device through a wireless mesh network (Mesh). The personal computer is connected to the edge ONT 2 through a fixed Ethernet. The smart television is connected to the edge ONT 1 through the fixed Ethernet. The fixed-line phone is connected to the edge ONT 1 by using a fixed analog telephone service (plain old telephone service, POTS). The IoT device is wirelessly connected to the edge ONT 1.

When a quantity of primary devices and secondary devices in the home network environment increases, these network devices need to be upgraded and maintained. Currently, an auto-configuration server (auto configuration server, ACS) is commonly used to implement upgrade of each primary gateway device and secondary gateway device.

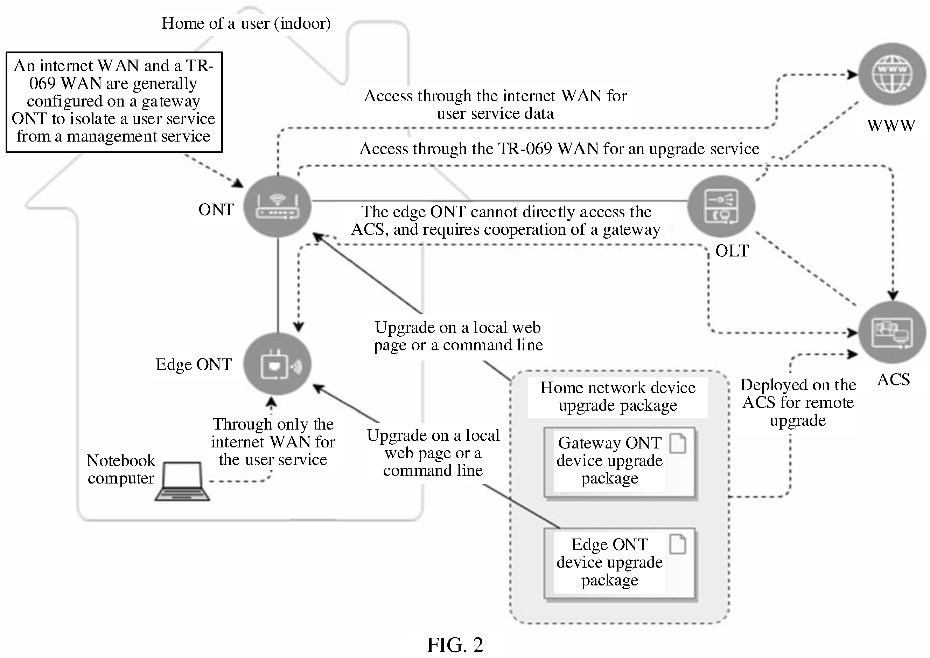

As shown in FIG. 2, in a scenario of upgrading and maintaining a home network device, the primary device (gateway ONT) is generally configured with an internet (Internet) wide area network (wide area network, WAN) and a TR-069 WAN to isolate a user service from a management service (upgrade service), and can access the WWW only through the Internet WAN for the user service, and access an ACS only through the TR-069 WAN for the upgrade service.

An operator may use a remote server (ACS) to perform remote maintenance and upgrade on a device according to a standard TR-069 protocol. Alternatively, staff of an operator may locally maintain and upgrade the network device on a local area network (local area network, LAN) side via a computer device through a web (WEB) page of the network device. In other words, a gateway ONT device upgrade package and an edge ONT device upgrade package in a home network device upgrade package may be used to perform upgrade on the local web page or a command line, or deployed on the ACS for remote upgrade.

However, no matter which method is used, because there are a plurality of network devices in an entire home network, the network devices need to be maintained and upgraded one by one, that is, different software version files are required to independently maintain and upgrade the network devices. When there are many network sub-devices in the FTTR scenario, maintenance and upgrade efficiency of the entire home network is significantly reduced.

In addition, when the ACS is used for upgrade, the ACS cannot directly manage the sub-devices in the home network due to network configuration isolation. In other words, the edge ONT cannot directly access the ACS. For a primary device and a secondary device of a same vendor, a factory default setting enables the ACS to independently manage the edge ONT (in this case, the primary device is used only for a traversal function). However, there are some restrictions.

Specifically, some ACSs have capacity limitations. Due to a substantial increase in a quantity of edge ONT devices in an FTTR home network, it is difficult for an existing ACS to cope with such load, and the operator needs to expand a capacity of the current network to solve this problem. Further, the ACS is deployed in a dedicated network with limited broadband network traffic. When the edge ONT is being upgraded, a large amount of data needs to be transmitted, resulting in a limited ACS network bandwidth and longer service upgrade time. The limited server capacity and the limited network bandwidth make it impossible to directly upgrade and maintain a network device in the home network. In addition, because the edge ONT is located in the home network, the edge ONT cannot directly access the ACS server. In other words, the ACS cannot directly upgrade and maintain the network device in the home network. Therefore, the gateway ONT needs to cooperate in setting network routing information. However, there is a problem during collaboration between devices of different versions and different vendors.

Based on this, embodiments of this application provide a device upgrade method and a related device, to improve network device upgrade efficiency. Embodiments of this application further provide a corresponding network device, a compute device, a storage medium, and the like. The following separately provides detailed descriptions.

The following describes the device upgrade method provided in embodiments of this application with reference to the foregoing terms and concepts and application scenarios.

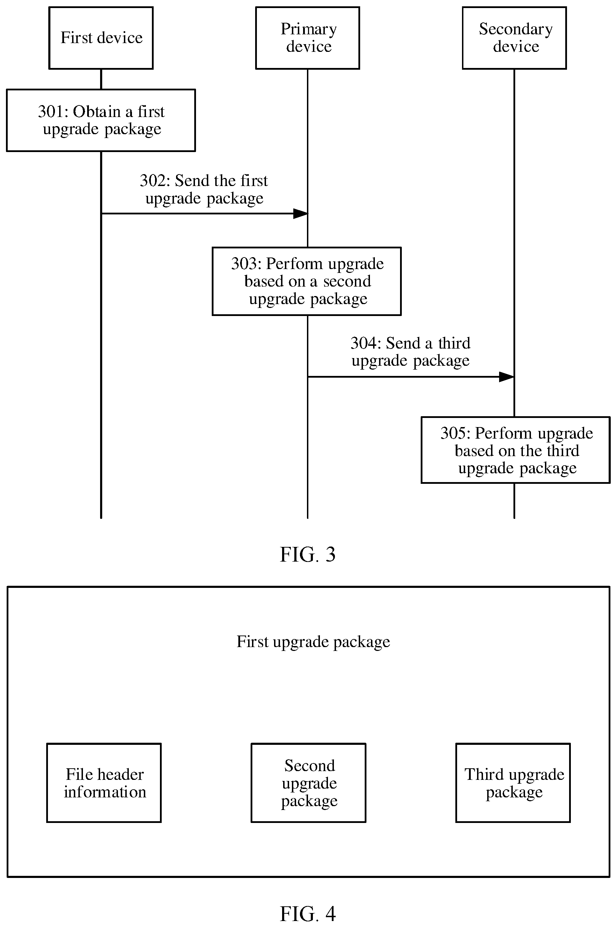

As shown in FIG. 3, an embodiment of this application provides a device upgrade method. An embodiment of the method includes the following steps.

301: A first device obtains a first upgrade package.

When a plurality of network devices need to be upgraded in an FTTP scenario, for example, in the scenario shown in FIG. 2, software upgrade packages for the plurality of network devices may be different because models, versions, vendors, and the like of the network devices are different, that is, upgrade packages for a primary device and a secondary device are independent of each other. Therefore, the upgrade packages for the primary device and the secondary device need to be merged. To be specific, the first device first needs to obtain the first upgrade package, where the first upgrade package includes a second upgrade package used to upgrade the primary device and the third upgrade package used to upgrade the secondary device.

Specifically, the first device may directly use a data node defined in TR-181 in a current standard TR-069 protocol family to obtain a quantity of secondary devices in a network in the current scenario (where there is one primary device by default), that is, obtain, according to a current standard protocol, information about the secondary device connected to the primary device in the network. After obtaining the information, the first device may merge the upgrade packages for the primary device and the secondary device based on the information. There are a plurality of specific merging manners, which are separately described below.

### 1. Direct Merging

As shown in FIG. 4, in this solution, the second upgrade package and the third upgrade package may be merged after file header information is simply added to the second upgrade package and the third upgrade package, that is, a plurality of files may be merged after description and offset information of the files is added before the files. In this case, in addition to the second upgrade package and the third upgrade package, the file header information is further included in the first upgrade package obtained through merging. The file header information is used to describe offset information and an upgrade package size of the second upgrade package, and offset information and an upgrade package size of the third upgrade package. According to this merging solution, upgrade packages for any network device may be merged, including upgrade packages for devices of different vendors.

For example, as shown in Table 1, the file header information may be used in the merged first upgrade package to distinguish between the second upgrade package and the third upgrade package. In addition, there may be a plurality of third upgrade packages. When a processing capability of a device supports identification of the plurality of third upgrade packages, the plurality of third upgrade packages and the second upgrade package may be directly merged together.

**Table 1**

| Field | Type | Description |
|---|---|---|
| MagicNumber | 32-bit integer | Magic number indicating that this is a merged upgrade package: For example, this field may be specifically 0x33445566, which is specifically defined by implementation software, as long as it can identify that this is a merged upgrade package |
| PackageNum | 32-bit integer | Indicating a quantity of upgrade packages that are merged |
| PackageOffset1 | 32-bit integer | Offset information of the second upgrade package in the first upgrade package |
| PackageSize 1 | 32-bit integer | Size of the second upgrade package |
| PackageOffset2 | 32-bit integer | Offset information of the third upgrade package in the first upgrade package |
| PackageSize2 | 32-bit integer | Size of the third upgrade package |
| ... | ... | ... |

It should be understood that specific content and a form of the file header information may alternatively be other content and forms. The specific content and the form of the file header information are not limited in embodiments of this application.

### 2. Differential merging

In this solution, an identical part of the second upgrade package and the third upgrade package is merged into a common upgrade package. The common upgrade package may also be understood as a shared subpackage (item (item)). A non-identical part is used as a differential upgrade package after being marked with description information (for example, identification information) of different network devices. The common upgrade package and the differential upgrade package are merged into the first upgrade package. In other words, the first upgrade package includes the common upgrade package and the differential upgrade package. The common upgrade package includes the identical part of the second upgrade package and the third upgrade package. The differential upgrade package includes the non-identical part of the second upgrade package and the third upgrade package, and the description information of the non-identical part.

For the differential merging solution, each third upgrade package that is newly added actually increases space occupied by the first upgrade package by only 5% to 10% because there are many common parts.

For example, a kernel part (that is, an operating system part of the network device) of the second upgrade package is the same as that of the third upgrade package, and during merging, only one kernel needs to be retained and placed in the common upgrade package. Another identical part is processed in the same manner. Different non-identical parts are reserved in the differential upgrade package, and are distinguished by using description information.

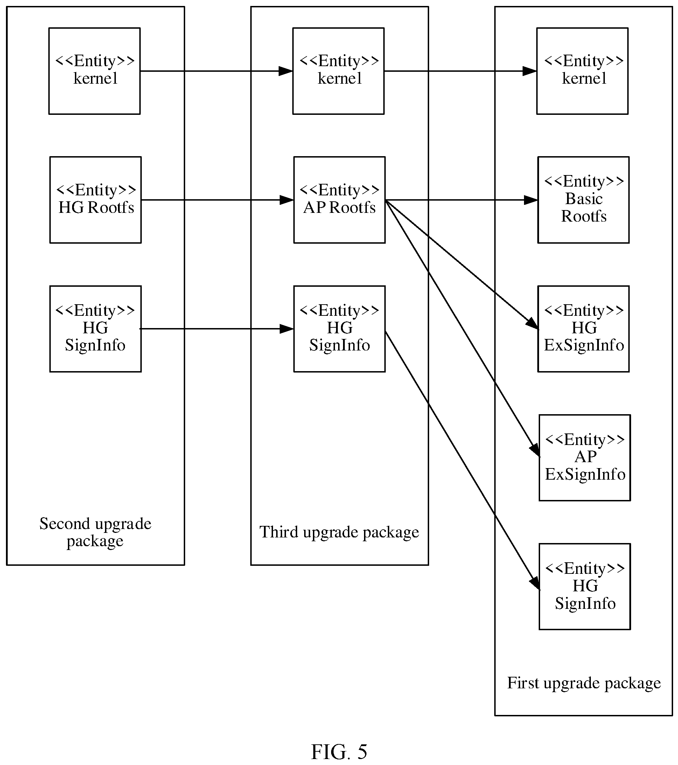

As shown in FIG. 5, if kernel parts are all <<Entity>>kernel, only one is retained. Similarly, if service parts <<Entity>>HG SignInfo are the same, only one is retained, where signatures of the service parts need to be discarded, and then re-signing is performed. However, the second upgrade package includes a service part <<Entity>>HG Rootfs, and the third upgrade package includes a service part <<Entity>>AP Rootfs. The two parts are different. In this case, identical files of the two parts are extracted as <<Entity>>Basic ExRootfs and stored as an identical part, and non-identical files are extracted as <<Entity>>HG ExRootfs and <<Entity>>AP ExRootfs and stored as non-identical parts.

It should be understood that each common part and each non-identical part have information identifying a network device. For example, there is a network device A, a network device B, and a network device C. If a common part A is applicable only to the network device A and the network device B, the common part A also identifies the network devices to which the common part A is applicable, and does not identify information about the network device C. Similarly, each non-identical part identifies only a network device to which the non-identical part is applicable, to facilitate use by the primary device.

The common upgrade package and the differential upgrade package are determined by the first device based on a hash algorithm. To be specific, the first device performs difference comparison between the second upgrade package with the third upgrade package by using the hash algorithm, to screen an identical part and a non-identical part. The hash algorithm may be specifically Md5, sha1, sha256, or the like. This is not limited in embodiments of this application.

It should be noted that because a non-identical part is associated with a network device to some extent, and integrity of a software package needs to be considered to ensure that digital signature verification information of a vendor is correct, the differential merging solution is particularly applicable to network devices of a same vendor.

It should be understood that a manner of merging the upgrade packages for the primary device and the secondary device includes but is not limited to the foregoing two manners. For example, files of the non-identical parts are merged in an incremental manner by using an incremental patch. A specific method for merging the upgrade packages for the primary device and the secondary device is not limited in embodiments of this application.

In this embodiment of this application, a file comparison-based differential solution is used to distinguish between non-identical files. In this way, an original complete upgrade program package is split into a plurality of parts. An OverlayFS technology already supported by Linux may be used to logically merge the split program parts into complete parts, and then start execution. Actually, as long as content of the program package is complete, another splitting and merging technology may alternatively be used, for example, temporary merging (that is, two or more parts are copied to a same temporary directory for use) or other merging manners may be used.

302: The first device sends the first upgrade package to the primary device.

After the upgrade packages for the primary device and the secondary device are merged into the large first upgrade package, all required upgrade packages are transmitted to the primary device as the upgrade package for the primary device. In this case, the primary device needs to process the upgrade package for the primary device and the upgrade package for the secondary device.

After receiving the first upgrade package sent by the first device, the primary device first needs to extract the second upgrade package and the third upgrade package from the common upgrade package and the differential upgrade package, or extract the second upgrade package and the third upgrade package from the first upgrade package based on the file header information.

303: The primary device performs upgrade based on the second upgrade package.

304: The primary device sends the third upgrade package to the secondary device.

305: The secondary device performs upgrade based on the third upgrade package.

The first device may be specifically in a plurality of forms. Upgrade procedures are also different when the first devices are different. The following separately provides descriptions.

### 1: The first device is an auto-configuration server ACS.

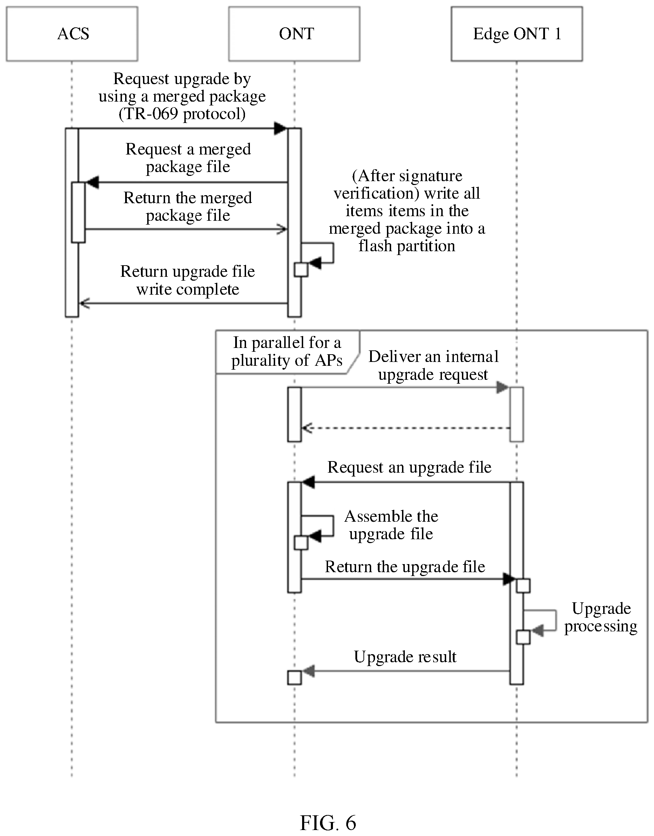

For example, as shown in FIG. 6, in step 302, the ACS sends an upgrade request to the primary device (ONT) according to a standard TR-069 protocol, where the upgrade request may be identified as an upgrade request for the merged first upgrade package (that is, a merged package), instead of an upgrade request for the primary device only. The primary device requests the first upgrade package from the ACS based on the upgrade request. After the ACS sends the first upgrade package to the primary device, the primary device performs signature verification, and writes all content (for example, items (items) such as the second upgrade package and the third upgrade package) in the first upgrade package into a flash memory (Flash) of the primary device.

The current TR-069 protocol already has a complete procedure of upgrading the primary device. Therefore, after extracting the second upgrade package, the primary device may complete upgrade according to a conventional protocol and method.

Further, the primary device communicates with the secondary device according to the universal plug and play UPnP extended protocol. In a home network, a UPnP protocol may be used to implement communication between a primary device and a secondary device. However, a standard UPnP protocol does not provide a method for the primary device to upgrade the secondary device. Therefore, the standard UPnP protocol needs to be extended on this basis.

For example, the UPnP extended protocol is shown in Table 2. It should be understood that the UPnP extended protocol only needs to support communication for upgrade of the secondary device by the primary device. Specific content of the UPnP extended protocol is not limited in embodiments of this application.

**Table 2**

| UPnP parameter attribute | Type | Description |
|---|---|---|
| FramewareUpgradeRequest | Character string | Protocol extension method name, indicating a request from the primary device to the secondary device for upgrade |
| UpgURL | Character string | Upgrade address: Fill in a service address of the primary device. The secondary device directly uses this URL to request the upgrade package from the primary device in the home network |
| DevicesList | Character string | Name of a list of network devices that support upgrade: When the secondary device receives a related message, the secondary device may determine whether to request the primary device for upgrade |
| Version | Character string | Version number of the software package: After comparing version numbers, the secondary device determines whether to request upgrade |
| AutoReboot | Integer type | Whether to reboot |

After extracting the third upgrade package from the first upgrade package, the primary device initiates an internal upgrade request and version number verification to the secondary device (Edge ONT 1) according to the UPnP extended protocol. The secondary device requests the third upgrade package from the primary device based on the internal upgrade request (the primary device may alternatively extract the third upgrade package after receiving the request of the secondary device, and perform assembling based on an upgrade package format requirement of the secondary device). After receiving the third upgrade package, the secondary device completes verification and upgrade operations for the third upgrade package, and returns an upgrade result.

It should be understood that the primary device may simultaneously send the third upgrade package to a plurality of secondary devices, and the first device completes an upgrade procedure of the first device after sending the first upgrade package to the primary device, implementing asynchronous upgrade, reducing pressure of the ACS server, and improving upgrade efficiency.

### 2: The first device is a computer device.

In addition to remote upgrade on the ACS, a maintenance engineer of the operator may perform local upgrade via a computer device.

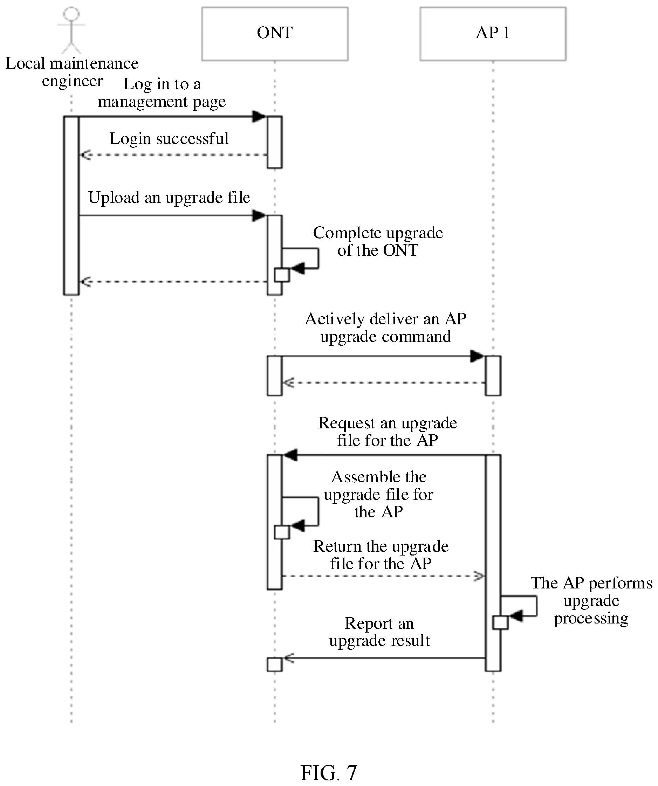

For example, as shown in FIG. 7, the maintenance engineer logs in to a management page of the primary device through a local area network in the home network, and upgrades all network devices in the home network at a time by using the merged first upgrade package (upgrade file).

When the first device is a computer device, the only difference from the first solution is a configuration plane that triggers upgrade. For subsequent upgrade procedures of the primary device (ONT) and the secondary device (AP 1), refer to the foregoing related descriptions. Details are not described herein again in this embodiment of this application.

It should be understood that in this case, the maintenance engineer may actively initiate an upgrade request locally via the secondary device, upload the first upgrade package to the primary gateway via the secondary gateway, and then complete an upgrade operation of the entire home network.

Optionally, the first upgrade package may be further added with time information, where the time information indicates upgrade time of the secondary device. Therefore, the primary device may upgrade the secondary device in any time period based on a user requirement.

The following describes in detail the device upgrade method provided in this embodiment of this application with reference to another example.

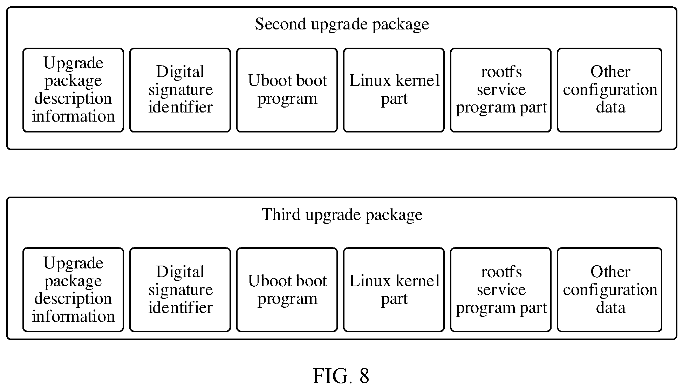

As shown in FIG. 8, both a second upgrade package for a primary device (which may also be understood as a primary gateway or a gateway) and a third upgrade package for a secondary device (which may also be understood as a secondary gateway or an AP) include upgrade package description information, a digital signature identifier, a Uboot boot program, a Linux kernel part, a rootfs service program part, and other configuration data. Although software upgrade packages for the two network devices are basically the same in structure, there is a specific difference in the rootfs service program part and the other configuration data. The two upgrade packages are merged in a differential merging manner.

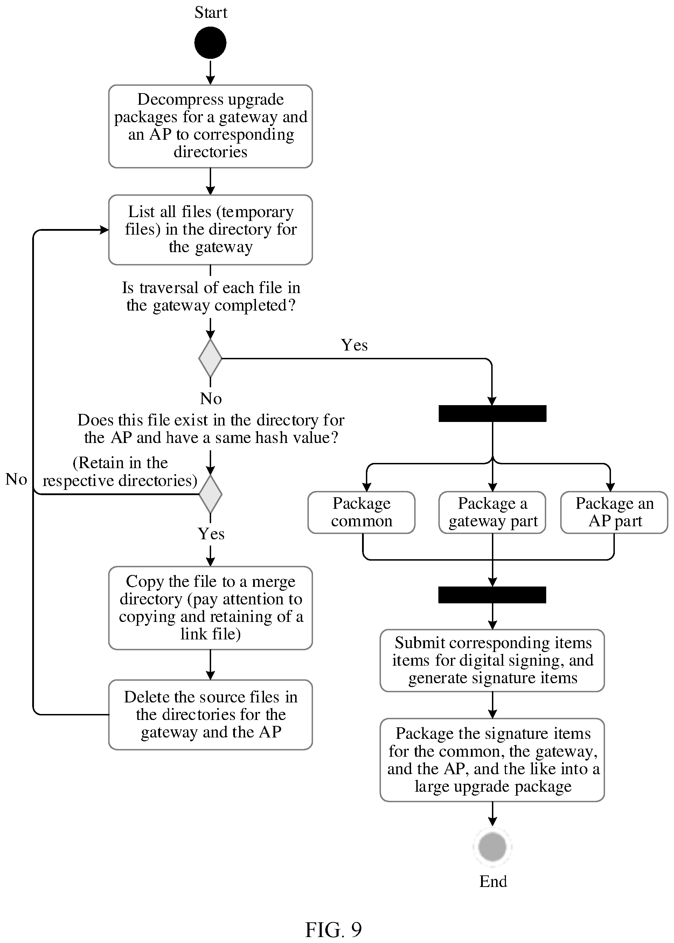

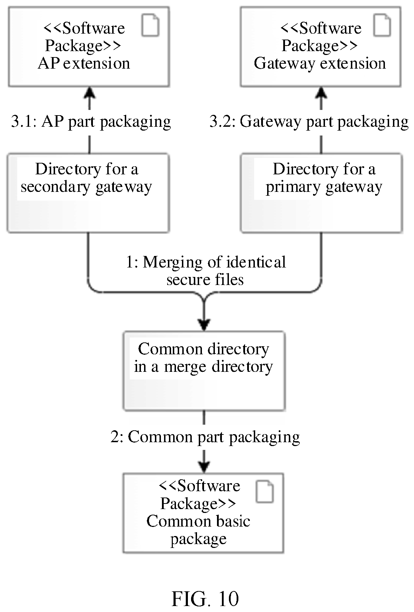

As shown in FIG. 9 and FIG. 10, in a specific upgrade procedure, the upgrade packages for the two network devices are first decompressed and completely split into different sub-items. For identical sub-items, for example, the Uboot boot part and the Linux kernel part, no processing is required. An upgrade package description part and a digital signature part (for integrity verification of the upgrade package) need to be re-modified, and digital signatures need to be added. Processing is not performed herein. The non-identical rootfs service program parts are further compared and processed.

Specifically, the rootfs of the two different network devices are first decompressed to different temporary directories, which are assumed to be A_Tmp (a temporary directory for the primary gateway) and B_Tmp (a temporary directory for the secondary gateway). Then, three output directories are created, which are output directories for the primary gateway and the secondary gateway, and a common directory "Basic". The output directory for the primary gateway is used to store a file used in the primary gateway. The output directory for the secondary gateway is used to store a file used in the secondary gateway. "Basic" is used to store a file shared by the two network devices.

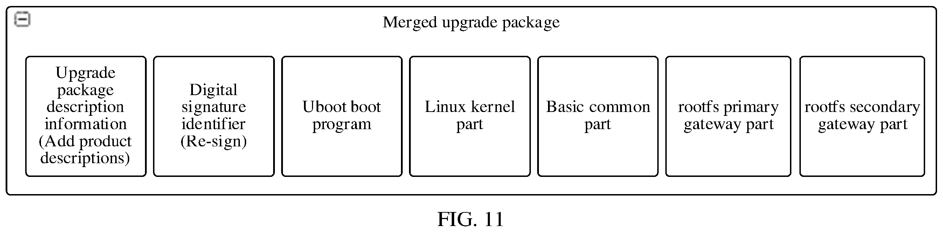

Then, each file in the temporary directory A_Tmp is traversed. A corresponding file in the temporary directory B_Tmp for the secondary gateway is found with an identical file name (including an identical relative path). If identical files are found, hash values of the two files are calculated (by using an SHA-1 algorithm) and compared. If the hash values of the two files are the same, the file of the secondary gateway is discarded, and the file of the primary gateway is placed in a directory for the common part. If the hash values of the two files are different, one file is placed in the output directory for the primary gateway, and the other file is placed in the output directory for the secondary gateway. If no corresponding file is found in the secondary gateway, the file is directly placed in the output directory for the primary gateway until all files in the temporary directory for the primary gateway are processed. Then, all remaining files in the temporary directory for the secondary gateway are copied to the output directory for the secondary gateway. Finally, the three output directories are analyzed and packaged into three parts, and the three parts and another part having no differences are merged into one upgrade package file, to obtain a first upgrade package shown in FIG. 11.

It should be noted that the foregoing processing is basically the same as that of upgrading a gateway according to a current standard TR-069 protocol. The only difference is that for the primary gateway, the upgrade package contains some additional application files that do not belong to the primary gateway. These additional files occupy only a little flash space and have no other impact. Therefore, there are basically no significant changes. In addition, during upgrade verification of a software package, simple adjustments are required for whether the software package can be loaded to a specified product and whether a digital signature of the software package is correct. These adjustments are already largely supported by current products and therefore are not described in detail.

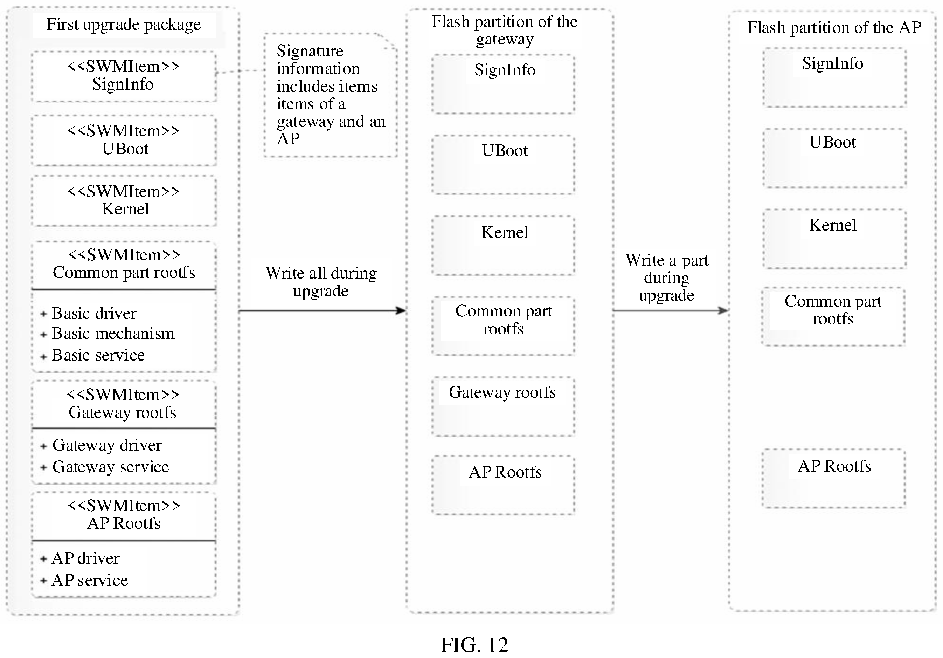

FIG. 12 shows a data relationship between the first upgrade package and the primary device (gateway) and the secondary device (AP) after the first upgrade package (SWM Package) is generated. The merged first upgrade package includes comprehensive content, and includes all upgrade data of the primary device and the secondary device. When the primary device is upgraded, all data, including the upgrade data of the secondary device, is written into a flash of the primary device, to ensure that the primary device can upgrade the secondary device subsequently, and when the secondary device requests the primary device for upgrade, the primary device sends only data required by the secondary device to the secondary device. Only the data required by the secondary device is written into a flash of the secondary device.

In embodiments of this application, the upgrade packages for the primary device and the secondary device are merged, and the primary device and the secondary device can still be upgraded. The upgrade packages for the primary device and the secondary device are merged into one upgrade package in the direct merging or differential merging manner, and the merged upgrade package does not affect a previous upgrade function, that is, the primary device can be upgraded separately, or the secondary device can be upgraded separately. During upgrade processing of the home network, when the primary device receives the merged first upgrade package, after completing upgrade of the primary device, the primary device further identifies the upgrade data of a secondary device part in the first upgrade package, and actively completes upgrade of the secondary device in the local area network. The primary device in the home network can maintain and upgrade the secondary device internally. Therefore, when an external network is disconnected, a secondary device in an internal network can still be upgraded and maintained.

The foregoing describes the device upgrade method provided in embodiments of this application. The following describes a related device provided in embodiments of this application with reference to the accompanying drawings.

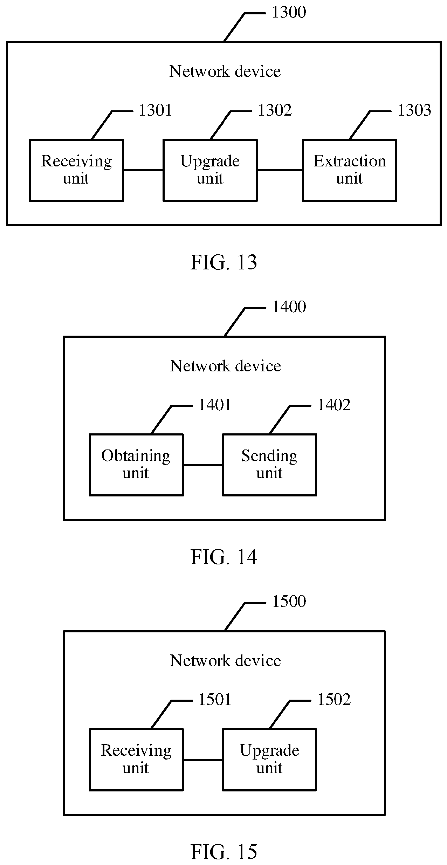

As shown in FIG. 13, an embodiment of this application provides a network device. An embodiment of the network device 1300 includes:
a receiving unit 1301, configured to receive a first upgrade package sent by a first device, where the first upgrade package includes a second upgrade package used to upgrade a primary device and a third upgrade package used to upgrade a secondary device, where the receiving unit 1301 may perform step 302 in the method embodiment; and
an upgrade unit 1302, configured to perform upgrade based on the second upgrade package, and/or send the third upgrade package to the secondary device to enable the secondary device to perform upgrade based on the third upgrade package, where the upgrade unit 1302 may perform step 303 and step 304 in the method embodiment.

Optionally, the first upgrade package includes a common upgrade package and a differential upgrade package. The common upgrade package includes an identical part of the second upgrade package and the third upgrade package. The differential upgrade package includes a non-identical part of the second upgrade package and the third upgrade package, and description information of the non-identical part.

Optionally, the network device 1300 further includes an extraction unit 1303. The extraction unit 1303 is configured to extract the second upgrade package from the common upgrade package and the differential upgrade package. The extraction unit 1303 is further configured to extract the third upgrade package from the common upgrade package and the differential upgrade package.

Optionally, the first upgrade package further includes file header information. The file header information is used to describe offset information and an upgrade package size of the second upgrade package, and offset information and an upgrade package size of the third upgrade package.

Optionally, the primary device communicates with the secondary device according to a universal plug and play UPnP extended protocol.

Optionally, the first device is an auto-configuration server or a computer device.

The network device 1300 provided in this embodiment of this application may be understood with reference to corresponding content about the primary device in the device upgrade method embodiment. Details are not described herein again.

As shown in FIG. 14, an embodiment of this application further provides a network device. An embodiment of the network device 1400 includes:
an obtaining unit 1401, configured to obtain a first upgrade package, where the first upgrade package includes a second upgrade package used to upgrade a primary device and a third upgrade package used to upgrade a secondary device, where the obtaining unit 1401 may perform step 301 in the method embodiment; and
a sending unit 1402, configured to send the first upgrade package to the primary device, so that the primary device performs upgrade based on the second upgrade package, and/or upgrades the secondary device based on the third upgrade package, where the sending unit 1402 may perform step 302 in the method embodiment.

Optionally, the first upgrade package includes a common upgrade package and a differential upgrade package. The common upgrade package includes an identical part of the second upgrade package and the third upgrade package. The differential upgrade package includes a non-identical part of the second upgrade package and the third upgrade package, and description information of the non-identical part.

Optionally, the common upgrade package and the differential upgrade package are determined by the obtaining unit based on a hash algorithm.

Optionally, the first upgrade package further includes file header information. The file header information is used to describe offset information and an upgrade package size of the second upgrade package, and offset information and an upgrade package size of the third upgrade package.

Optionally, the primary device communicates with the secondary device according to a universal plug and play UPnP extended protocol.

Optionally, the first device is an auto-configuration server or a computer device.

The network device 1400 provided in this embodiment of this application may be understood with reference to corresponding content about the first device in the device upgrade method embodiment. Details are not described herein again.

As shown in FIG. 15, an embodiment of this application further provides a network device. An embodiment of the network device 1500 includes:
a receiving unit 1501, configured to receive a third upgrade package sent by a primary device, where the third upgrade package is extracted by the primary device from a first upgrade package, and the first upgrade package is sent by a first device to the primary device, where the receiving unit 1501 may perform step 304 in the method embodiment; and
an upgrade unit 1502, configured to perform upgrade based on the third upgrade package, where the upgrade unit 1502 may perform step 305 in the foregoing method embodiment.

Optionally, the receiving unit 1501 communicates with the primary device according to a universal plug and play UPnP extended protocol.

The network device 1500 provided in this embodiment of this application may be understood with reference to corresponding content about the secondary device in the device upgrade method embodiment. Details are not described herein again.

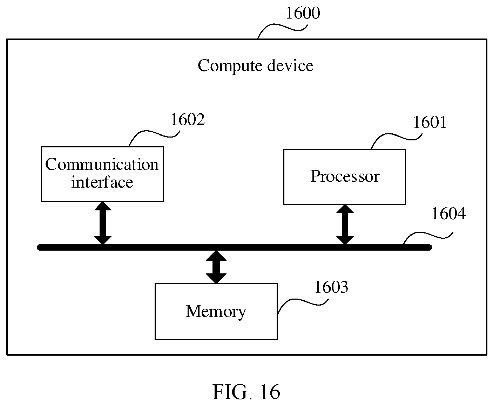

As shown in FIG. 16, an embodiment of this application further provides a compute device. FIG. 16 is a diagram of a possible logical structure of a compute device 1600. The compute device 1600 includes a processor 1601, a communication interface 1602, a memory 1603, and a bus 1604. The processor 1601 may include a CPU, or a CPU and at least one of a GPU, an NPU, and another type of processor. The processor 1601, the communication interface 1602, and the memory 1603 are connected to each other through the bus 1604. In this embodiment of this application, the processor 1601 is configured to control and manage an action of the compute device 1600. For example, the processor 1601 is configured to perform steps 301 to 305 in FIG. 3, and/or another process of the technology described in this specification. The compute device 1600 may be specifically the first device, the primary device, or the secondary device in the foregoing embodiments. The communication interface 1602 is configured to support the compute device 1600 in performing communication. The memory 1603 is configured to store program code and data of the compute device 1600.

The processor 1601 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The bus 1604 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 16, but this does not mean that there is only one bus or only one type of bus.

In another embodiment of this application, a computer-readable storage medium is further provided. The computer-readable storage medium stores computer-executable instructions. When at least one processor of a device executes the computer-executable instructions, the device performs the device upgrade method described in the foregoing embodiment.

In another embodiment of this application, a computer program product is further provided. The computer program product includes computer-executable instructions. The computer-executable instructions are stored in a computer-readable storage medium. At least one processor of a device may read the computer-executable instructions from the computer-readable storage medium. The at least one processor executes the computer-executable instructions, so that the device performs the device upgrade method described in the foregoing embodiment.

In another embodiment of this application, a chip system is further provided. The chip system includes at least one processor and an interface. The interface is configured to receive data and/or a signal. The at least one processor is configured to support implementation of the device upgrade method described in the foregoing embodiment. In a possible design, the chip system may further include a memory. The memory is configured to store program instructions and data that are necessary for the computer device. The chip system may include a chip, or may include a chip and another discrete component.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A device upgrade method, comprising:
receiving, by a primary device, a first upgrade package sent by a first device, wherein the first upgrade package comprises a second upgrade package used to upgrade the primary device and a third upgrade package used to upgrade a secondary device;
performing, by the primary device, upgrade based on the second upgrade package; and/or
sending, by the primary device, the third upgrade package to the secondary device to enable the secondary device to perform upgrade based on the third upgrade package.

2. The method according to claim 1, wherein the first upgrade package comprises a common upgrade package and a differential upgrade package, the common upgrade package comprises an identical part of the second upgrade package and the third upgrade package, and the differential upgrade package comprises a non-identical part of the second upgrade package and the third upgrade package, and description information of the non-identical part.

3. The method according to claim 2, wherein before performing, by the primary device, upgrade based on the second upgrade package, the method further comprises:
extracting, by the primary device, the second upgrade package from the common upgrade package and the differential upgrade package; and
before sending, by the primary device, the third upgrade package to the secondary device, the method further comprises:
extracting, by the primary device, the third upgrade package from the common upgrade package and the differential upgrade package.

4. The method according to claim 1, wherein the first upgrade package further comprises file header information, and the file header information is used to describe offset information and an upgrade package size of the second upgrade package, and offset information and an upgrade package size of the third upgrade package.

5. The method according to any one of claims 1 to 4, wherein the primary device communicates with the secondary device according to a universal plug and play UPnP extended protocol.

6. The method according to any one of claims 1 to 5, wherein the first device is an auto-configuration server or a computer device.

7. A device upgrade method, comprising:
obtaining, by a first device, a first upgrade package, wherein the first upgrade package comprises a second upgrade package used to upgrade a primary device and a third upgrade package used to upgrade a secondary device; and
sending, by the first device, the first upgrade package to the primary device, so that the primary device performs upgrade based on the second upgrade package, and/or upgrades the secondary device based on the third upgrade package.

8. The method according to claim 7, wherein the first upgrade package comprises a common upgrade package and a differential upgrade package, the common upgrade package comprises an identical part of the second upgrade package and the third upgrade package, and the differential upgrade package comprises a non-identical part of the second upgrade package and the third upgrade package, and description information of the non-identical part.

9. The method according to claim 8, wherein the common upgrade package and the differential upgrade package are determined by the first device based on a hash algorithm.

10. The method according to claim 7, wherein the first upgrade package further comprises file header information, and the file header information is used to describe offset information and an upgrade package size of the second upgrade package, and offset information and an upgrade package size of the third upgrade package.

11. The method according to any one of claims 7 to 10, wherein the primary device communicates with the secondary device according to a universal plug and play UPnP extended protocol.

12. The method according to any one of claims 7 to 11, wherein the first device is an auto-configuration server or a computer device.

13. A device upgrade method, comprising:
receiving, by a secondary device, a third upgrade package sent by a primary device, wherein the third upgrade package is extracted by the primary device from a first upgrade package, and the first upgrade package is sent by a first device to the primary device; and
performing, by the secondary device, upgrade based on the third upgrade package.

14. The method according to claim 13, wherein the secondary device communicates with the primary device according to a universal plug and play UPnP extended protocol.

15. A network device, comprising:
a receiving unit, configured to receive a first upgrade package sent by a first device, wherein the first upgrade package comprises a second upgrade package used to upgrade a primary device and a third upgrade package used to upgrade a secondary device; and
an upgrade unit, configured to perform upgrade based on the second upgrade package, and/or send the third upgrade package to the secondary device to enable the secondary device to perform upgrade based on the third upgrade package.

16. The device according to claim 15, wherein the first upgrade package comprises a common upgrade package and a differential upgrade package, the common upgrade package comprises an identical part of the second upgrade package and the third upgrade package, and the differential upgrade package comprises a non-identical part of the second upgrade package and the third upgrade package, and description information of the non-identical part.

17. The device according to claim 16, wherein the device further comprises:
an extraction unit, configured to extract the second upgrade package from the common upgrade package and the differential upgrade package, wherein
the extraction unit is further configured to extract the third upgrade package from the common upgrade package and the differential upgrade package.

18. The device according to claim 15, wherein the first upgrade package further comprises file header information, and the file header information is used to describe offset information and an upgrade package size of the second upgrade package, and offset information and an upgrade package size of the third upgrade package.

19. The device according to any one of claims 15 to 18, wherein the primary device communicates with the secondary device according to a universal plug and play UPnP extended protocol.

20. The device according to any one of claims 15 to 19, wherein the first device is an auto-configuration server or a computer device.

21. A network device, comprising:
an obtaining unit, configured to obtain a first upgrade package, wherein the first upgrade package comprises a second upgrade package used to upgrade a primary device and a third upgrade package used to upgrade a secondary device; and
a sending unit, configured to send the first upgrade package to the primary device, so that the primary device performs upgrade based on the second upgrade package, and/or upgrades the secondary device based on the third upgrade package.

22. The device according to claim 21, wherein the first upgrade package comprises a common upgrade package and a differential upgrade package, the common upgrade package comprises an identical part of the second upgrade package and the third upgrade package, and the differential upgrade package comprises a non-identical part of the second upgrade package and the third upgrade package, and description information of the non-identical part.

23. The device according to claim 22, wherein the common upgrade package and the differential upgrade package are determined by the obtaining unit based on a hash algorithm.

24. The device according to claim 21, wherein the first upgrade package further comprises file header information, and the file header information is used to describe offset information and an upgrade package size of the second upgrade package, and offset information and an upgrade package size of the third upgrade package.

25. The device according to any one of claims 21 to 24, wherein the primary device communicates with the secondary device according to a universal plug and play UPnP extended protocol.

26. The device according to any one of claims 21 to 25, wherein the first device is an auto-configuration server or a computer device.

27. A network device, comprising:
a receiving unit, configured to receive a third upgrade package sent by a primary device, wherein the third upgrade package is extracted by the primary device from a first upgrade package, and the first upgrade package is sent by a first device to the primary device; and
an upgrade unit, configured to perform upgrade based on the third upgrade package.

28. The device according to claim 27, wherein the receiving unit communicates with the primary device according to a universal plug and play UPnP extended protocol.

29. A compute device, comprising a processor, wherein computer-executable instructions are run on the processor, and when the computer-executable instructions are executed by the processor, the processor performs the method according to any one of claims 1 to 14.

30. A computer-readable storage medium, wherein the computer-readable storage medium stores a computer program, and when the computer program is executed by a processor, the method according to any one of claims 1 to 14 is implemented.
